# EUROPÄISCHE PATENTANMELDUNG

(11) **EP 1 493 619 A2**
(43) Veröffentlichungstag der Anmeldung: **05.01.2005**
(21) Anmeldenummer: 04010618.9
(22) Anmeldetag: 05.05.2004
(51) Int. Cl.: B60N 3/10

(54) **Halter für einen Getränkebehälter**

(30) Priorität: 03.07.2003 DE 10329959
(71) Anmelder: fischer automotive systems GmbH, 72160 Horb (DE)
(72) Erfinder: Schaal, Falk, 72275 Alpirsbach (DE)

(57) **Zusammenfassung**

Die Erfindung betrifft einen Halter, für einen Getränkebehälter, mit einer Ablagefach (2), wobei der Halter (1) einen Fachteiler (5) aufweist, der mit einer vertikalen Drehlagerung als Führung beweglich am Ablagefach (2) geführt ist und zwischen einer Nichtgebrauchsstellung und einer Gebrauchsstellung verschwenkt werden kann. In der Gebrauchstellung teilt der Fachteiler (5) einen Einstellbereich (4) für den Getränkebehälter vom übrigen Ablagefach (2) ab. Weiterhin weist der Halter (1) eine Durchmesserausgleichsklappe (10) auf, die beim Bewegen des Fachteilers (5) in die Nichtgebrauchsstellung aus dem Ablagefach (2) hinaus bewegt wird. Um einen derartigen Halter (1) zu schaffen, der komfortabel zu bedienen ist, schlägt die Erfindung vor, dass der Fachteiler (5) eine Drehfederung (15) aufweist sowie über eine Verriegelungseinrichtung (13,14) verriegelbar ist.

## Beschreibung

Die Erfindung betrifft einen Halter für einen Getränkebehälter wie bspw. eine Tasse, einen Becher oder eine Dose, mit den Merkmalen des Oberbegriffs des Anspruchs 1, der zum Einbau in einen Kraftwagen vorgesehen ist.

Ein derartiger Halter ist beispielsweise aus der Druckschrift DE 101 34 027 bekannt. Der bekannte Halter weist ein Ablagefach mit einem Fachteiler auf. Der Fachteiler dient der Abteilung eines Einstellbereichs für einen Getränkebehälter. Er kann dazu aus einer Nichtgebrauchsstellung, in der er das Ablagefach nicht unterteilt, in eine Gebrauchsstellung, in der er den Einstellbereich abteilt, bewegt werden. Hierzu weist er eine Drehlagerung als Führung auf, so dass er aus einer Seitenwand des Ablagefachs heraus in das Innere des Ablagefachs geschwenkt werden kann. Außerdem weist der bekannte Halter eine Durchmesserausgleichsklappe auf, die beim Hineinschwenken des Fachteilers in die Gebrauchsstellung in das Innere des Ablagefachs hinein bewegt wird. Beim Hinausschwenken des Fachteilers wird die Durchmesserausgleichsklappe dagegen aus dem Ablagefach hinaus bewegt.

Der Nachteil des bekannten Halters liegt in der umständlichen Handhabung des Fachteilers. Die genannte Druckschrift schlägt hierzu vor, an der Wandung des Fachteilers einen Griffwulst anzuordnen, mit dem der Fachteiler verschwenkt werden kann. Die Bedienung dieses Griffwulstes erfordert jedoch erhebliche Geschicklichkeit beim Schwenken in die Gebrauchsstellung, da der Griffwulst in der Nichtgebrauchsstellung nur wenig in das Ablagefach ragen soll und daher nur unzureichende Konturen zum Greifen aufweist.

Der Erfindung liegt daher die Aufgabe zugrunde, einen Halter für Getränkebehälter der eingangs genannten Art zu schaffen, der komfortabler zu bedienen sind.

Diese Aufgabe wird erfindungsgemäß durch den Halter mit den Merkmalen des Anspruchs 1 gelöst. Der Fachteiler des erfindungsgemäßen Halters weist eine Drehfederung auf. Diese erzeugt das zum Schwenken in die Gebrauchsstellung notwendige Moment. Um in der Nichtgebrauchsstellung gehalten zu werden, weist der Halter für den Fachteiler eine Verriegelungseinrichtung auf. Zum Schwenken des Fachteilers in die Gebrauchsstellung wird dieser lediglich entriegelt und verschwenkt dann getrieben durch die Drehfederung. Zum Schwenken in die Nichtgebrauchsstellung wird der Fachteiler entgegen der Federwirkung betätigt. Gegenüber dem Stand der Technik erlaubt dies eine deutlich einfachere Handhabung. Insbesondere wird die Produktanmutung hierdurch wesentlich verbessert, da das Schwenken in die Gebrauchsstellung "von selbst" erfolgt. Weiterhin ergibt sich der Vorteil, dass der Fachteiler nur in der Gebrauchs- und in der Nichtgebrauchsstellung stabile Lagen einnimmt. Gegenüber dem Stand der Technik, bei dem es ohne zusätzliche Rasteinrichtungen aufgrund von fahrtbedingten Vibrationen und/oder Trägheitskräften zum ungewollten Verschwenken des Fachteilers kommen kann, ist dies bei dem erfindungsgemäßen Halter ausgeschlossen. Auch wird ausgeschlossen, dass der Fachteiler in einer nur teilweise verschwenkten Position belassen wird, die weder einem Getränkebehälter ausreichenden Halt geben würde, noch das Ablagefach als solches vollständig nutzbar machen würde. Auch dies erhöht den Bedienkomfort und verbessert die Produktanmutung, da der Fachteiler nicht mehr in beliebigen Schwenkpositionen verbleiben kann.

In einer bevorzugten Ausführung des Halters weist der Fachteiler ein Betätigungselement auf. Das Schwenken in die Gebrauchsstellung wird nicht durch Handhabung des Fachteilers selbst, sondern durch das Betätigungselement ausgelöst. Dies vereinfacht die Bedienung des Fachteilers erheblich. Er kann außerdem in der Nichtgebrauchsstellung vollständig aus dem Ablagefach hinausgeschwenkt sein, oder sich an der Innenseite anlegen, wodurch das Ablagefach keinerlei Vorsprünge oder dgl. aufweist. Vorzugsweise sind die Verriegelungseinrichtung und das Betätigungselement dabei zumindest teilweise an der Durchmesserausgleichsklappe angeordnet. Hierdurch wird ein einfacher konstruktiver Aufbau mit wenigen Teilen möglich. Im gleichen Sinne wird vorzugsweise eine einzige Feder zur gleichzeitigen Verwendung als Teil der Verriegelungseinrichtung und zur Realisierung der Ausgleichsbewegung der Durchmesserausgleichsklappe verwendet.

In einer alternativen Ausführung des Halters ist die Verriegelungseinrichtung eine Push-Push-Mechanik. Dies erübrigt ein gesondertes Betätigungselement. Zum Schwenken in die Gebrauchsstellung wird der Fachteiler kurz entgegen der Wirkung der Drehfeder gedrückt und verschwenkt dann selbsttätig in die Gebrauchsstellung. Zum Zurückschwenken wird der Fachteiler wiederum solange entgegen der Wirkung der Drehfeder verschwenkt, bis der Anschlag der Push-Push-Verriegelung erreicht wird.

In einer Weiterbildung des erfindungsgemäßen Halters weist der Fachteiler ein Drehdämpfungselement auf. Hierdurch wird insbesondere die Schwenkbewegung in die Gebrauchsstellung in ihrer Geschwindigkeit begrenzt, wodurch sich gegenüber einer ungedämpften Bewegung sowohl eine bessere Produktanmutung als auch eine Schonung der Endpositionsanschläge ergibt.

Um eine einfache Montage des Halters zu gewährleisten, ist die Drehlagerung des Fachteilers in einer bevorzugten Ausführung als Bajonettverbindung ausgeführt. Zum Fügen des Fachteilers in das Ablagefach wird er lediglich eingesteckt und verdreht. Um ein versehentliches Demontieren während des Gebrauchs zu verhindern, kann das Einstecken beispielsweise in einer Drehstellung erfolgen, die während des Schwenkens zwischen der Gebrauchs- und der Nichtgebrauchsstellung nicht erreicht wird. In diesem Fall muss mindestens einer der beiden Anschläge für die Gebrauchs- und die Nichtgebrauchsstellung bei der Montage überschwenkbar sein. Soll darüber hinaus auch eine Demontage beispielsweise zu Reinigungszwecken ermöglicht werden, so muss wiederum mindestens einer der beiden Anschläge überfahrbar sein, wobei diese Überfahrbarkeit durch erhöhte Kräfte oder eine gesonderte Lösung des entsprechenden Anschlags erfolgt.

Die Erfindung wird nachfolgend anhand dreier in der Zeichnung dargestellter Ausführungsbeispiele näher erläutert. Es zeigen:
- Figur 1: einen erfindungsgemäßen Halter in der Gebrauchsstellung in perspektivischer Darstellung;
- Figur 2: Teile des selben Halters in perspektivischer Darstellung;
- Figur 3: einen zweiten erfindungsgemäßen Halter in der Gebrauchsstellung in perspektivischer Schnittdarstellung;
- Figur 4: den selben Halter in einer weiteren perspektivischen Darstellung;
- Figur 5: einen dritten erfindungsgemäßen Halter während der Montage in perspektivischer Schnittdarstellung;
- Figur 6: den selben Halter während der Montage in einer weiteren perspektivischen Schnittdarstellung;
- Figur 7: den selben Halter in der Gebrauchsstellung in perspektivischer Schnittdarstellung; und
- Figur 8: den selben Halter in der Gebrauchsstellung in einer weiteren perspektivischen Darstellung.

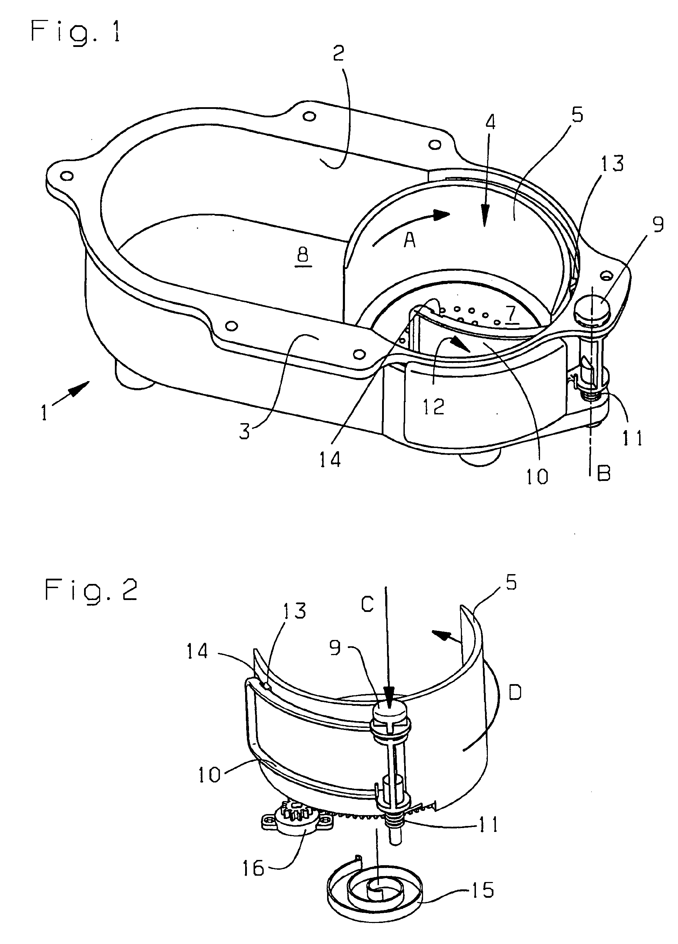

Der in Figur 1 dargestellte, erfindungsgemäße Halter 1 zum Halten eines Getränkbehälters wie bspw. einer Tasse, eines Bechers oder einer Dose (nicht dargestellt) ist zum Einbau in einen Kraftwagen vorgesehen. Der Halter 1 weist ein mulden- oder wannenförmiges Ablagefach 2 auf. Der Rand 3 dient zum Einbau des Halters 1 in beispielsweise eine Mittelkonsole eines Kraftwagens. Zur Abtrennung eines Einstellbereichs 4 weist der Halter 1 einen trommelförmigen Fachteiler 5 mit einer etwa 180° umschreibenden Wandung 6 und einem Drehteller 7 auf. Der Fachteiler ist drehbar um die vertikale Achse gelagert. Er könnte ebenso gut einen unterhalb des Bodens 8 des Ablagefachs 1 angeordneten Drehteller aufweisen. In diesem Fall wäre es außerdem möglich, den Fachteiler 5 durch eine nicht dargestellte Öffnung in der Wandung 6 zwischen der Gebrauchs- und Nichtgebrauchsstellung hinein- und hinauszuschwenken. Die dargestellte Drehposition des Fachteilers 5 entspricht der Gebrauchsstellung. Die Wandung 6 ragt in das Innere des Ablagefachs 2 hinein und trennt hierdurch den zylindrischen Einstellbereich 4 ab. Dieser ist nicht über den gesamten Umfang geschlossen, wodurch es insbesondere möglich ist, Tassen mit Henkeln einzustellen. Falls der Einstellbereich 4 nicht benötigt werden sollte, kann der Fachteiler 5 auf einfache Weise von Hand entlang der Schwenkbewegung A verschwenkt werden. Diese Schwenkbewegung A erfolgt entgegen dem Moment der Drehfederung (nicht dargestellt). Um den Fachteiler durch die Drehfederung wiederum in die Gebrauchsstellung zu verschwenken, wird das als Taste 9 ausgeführte Betätigungselement durch vertikalen Druck ausgelöst. Neben dem Fachteiler 5 weist der Halter außerdem eine Durchmesserausgleichsklappe 10 auf. Diese ist schwenkbar und vertikal verschiebbar entlang der Achse B gelagert und wird in der dargestellten Gebrauchsstellung von der als Torsionsfeder wirkenden Feder 11 in das Innere des Einstellbereichs 4 gedrückt. Die Durchmesserausgleichsklappe 10 dient damit dem sicheren Halt unterschiedlich großer Getränkebehälter. Beim Schwenken des Fachteilers 5 in die Nichtgebrauchsstellung wird die Durchmesserausgleichsklappe 10 vom Fachteiler 5 radial nach außen in die Aussparung 12 geschwenkt. Um den Fachteiler 5 in der Nichtgebrauchsstellung entgegen dem Moment der Drehfederung (nicht dargestellt) zu halten, weist der Halter 1 eine Verriegelungseinrichtung in Form eines Zapfens 13 am Fachteiler 5 und einer Nut 14 an der Durchmesserausgleichsklappe 10 auf. Wird der Fachteiler 5 in die Nichtgebrauchsstellung geschwenkt, so schnappt der Zapfen 13 in die Nut 14 ein und verriegelt damit die Schwenkbewegung. Beim Betätigen der Taste 9 wird die Durchmesserausgleichsklappe 10 entgegen der hier als Druckfeder wirkenden Feder 11 etwas nach unten gedrückt. Die Feder 11 ist somit sowohl Teil der Verriegelungseinrichtung des Fachteilers 5 als auch Federelement für die Ausgleichsbewegung der Durchmesserausgleichsklappe 10. Durch das Absenken der Durchmesserausgleichsklappe 10 gleitet der Zapfen 13 vertikal aus der Nut 14 und entriegelt damit den Fachteiler 5, der daraufhin in die Gebrauchsstellung schwenkt. Wird die Taste 9 anschließend losgelassen, so hebt die Feder 11 die Durchmesserausgleichsklappe 10 wieder in die dargestellte Lage an und schwenkt sie in das Innere des Einstellbereichs 4.

Figur 2 stellt herausgelöst nochmals die wichtigsten Teile der beschriebenen Mechanik in der Nichtgebrauchsstellung dar. Durch Druck auf die Taste 9 entsprechend Pfeil C wird der Zapfen 13 aus der Nut 14 an der Durchmesserausgleichsklappe 10 geschoben. Aufgrund der Drehfederung 15, die zwischen dem Drehteller 7 und dem darunter liegenden Boden 8 des Ablagefachs 2 (siehe Figur 1) angeordnet ist, wird der Fachteiler 5 entsprechend Pfeil D in die Gebrauchsstellung geschwenkt. Diese Schwenkbewegung wird durch das als Rotationsdämpfer 16 ausgeführte Drehdämpfungselement gedämpft, wodurch die Rotationsgeschwindigkeit bereits nach Durchlaufen eines kleinen Schwenkwinkels nahezu konstant ist.

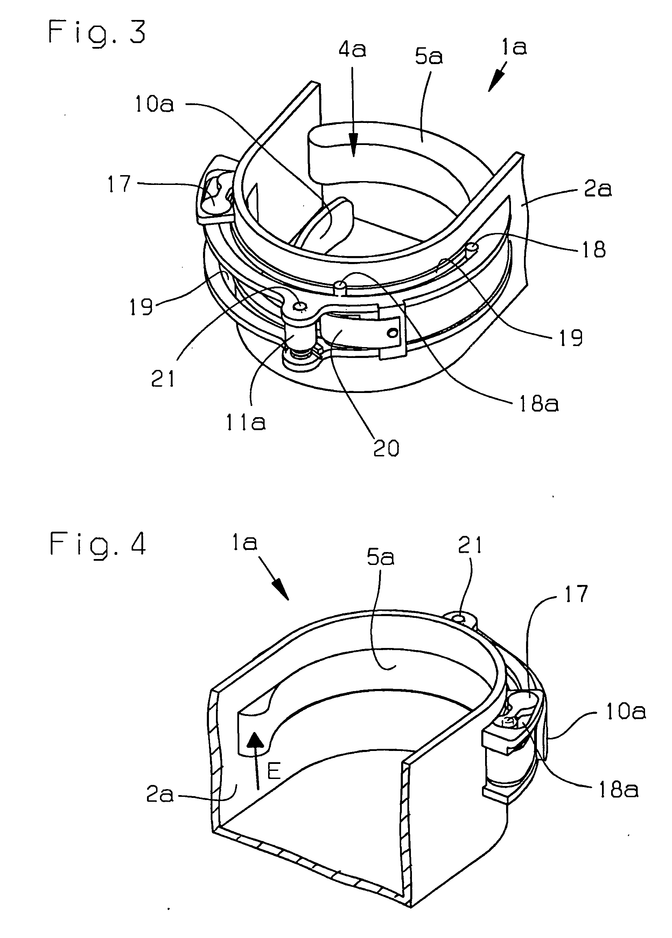

Figur 3 und 4 zeigen ein zweites Ausführungsbeispiel des Halters 1a mit einer Push-Push-Verriegelung 17. Der Halter 1a weist ebenfalls ein mulden- oder wannenförmiges Ablagefach 2a auf sowie einen Fachteiler 5a zur Abtrennung eines Einstellbereichs 4a. Der Fachteiler 5a ist hier jedoch nicht trommel-, sondern bügelförmig.

In Figur 3 ist der Fachteiler 5a in der Gebrauchsstellung dargestellt. Er ist durch mehrere Führungszapfen 18, 18a in Führungsbahnen 19 gelagert. Die Führungsbahnen 19 bilden hier eine Kreisbahn, denkbar sind aber auch hiervon leicht abweichende Geometrien. Als Drehfederung dient die Rollfeder 20. Die Durchmesserausgleichsklappe 10a wird durch die Feder 11 a in das Innere des Einstellbereichs 4a gedrückt. Aufgrund der Anordnung der Schwenkachse 21 der Durchmesserausgleichsklappe 10a wird diese beim Verschwenken des Fachteilers 5a in die Nichtgebrauchsstellung aus dem Ablagefach 2a gedrückt.

Figur 4 zeigt den Fachteiler 5a in Nichtgebrauchsstellung. Einer der Führungszapfen 18a wird zusätzlich zu seiner Führungsfunktion als Verriegelungszapfen für die Push-Push-Mechanik 17 verwendet. Zum Verschwenken des Fachteilers 5a wird dieser entsprechend Pfeil E leicht gedrückt. Hierdurch entriegelt die Push-Push-Mechanik 17 und der Fachteiler 5a schwenkt aufgrund der Rollfeder 20 in die Gebrauchsstellung. Umgekehrt wird der Fachteiler 5a zum Schwenken in die Nichtgebrauchsstellung soweit entgegen der Wirkung der Rollfeder 20 geschwenkt, bis der Führungszapfen 18a innerhalb der Push-Push-Mechanik anschlägt und nach dem Loslassen verriegelt.

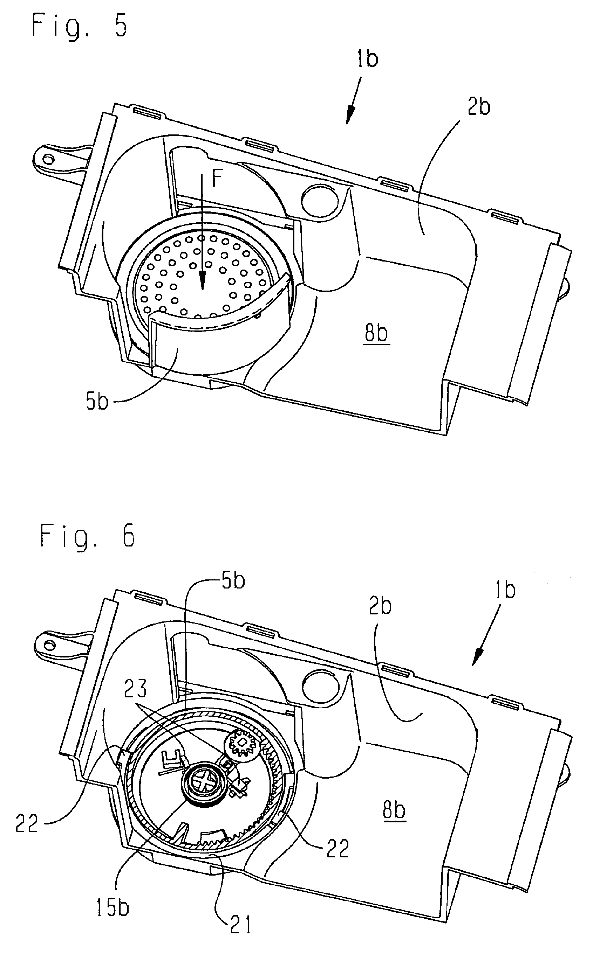

Ein weiteres Ausführungsbeispiel wird in den Figuren 5 bis 8 gezeigt. Der Halter 1 b weist wiederum ein mulden- oder wannenförmiges Ablagefach 2b sowie einen trommelförmigen Fachteiler 5b auf. Der Übersicht halber ist keine Durchmesserausgleichsklappe dargestellt.

In den Figuren 5 und 6 ist zunächst die Position des Fachteilers 5b während der Montage dargestellt. Dabei wird der Fachteiler 5b entsprechend Pfeil F auf den Boden 8b gesetzt. Figur 6 zeigt den untersten Teil des Fachteilers 5b im Schnitt (Schnittflächen schraffiert). Er weist umlaufende Führungsrippen 21 auf, die im Bereich der Bajonettrippen 22 des Bodens 8b ausgespart sind, um die Montage zu ermöglichen. Die Drehfederung 15b ist bereits im Rahmen einer Vormontage eingesetzt und zwischen den Federanschlägen 23 des Bodens 8b vorgespannt.

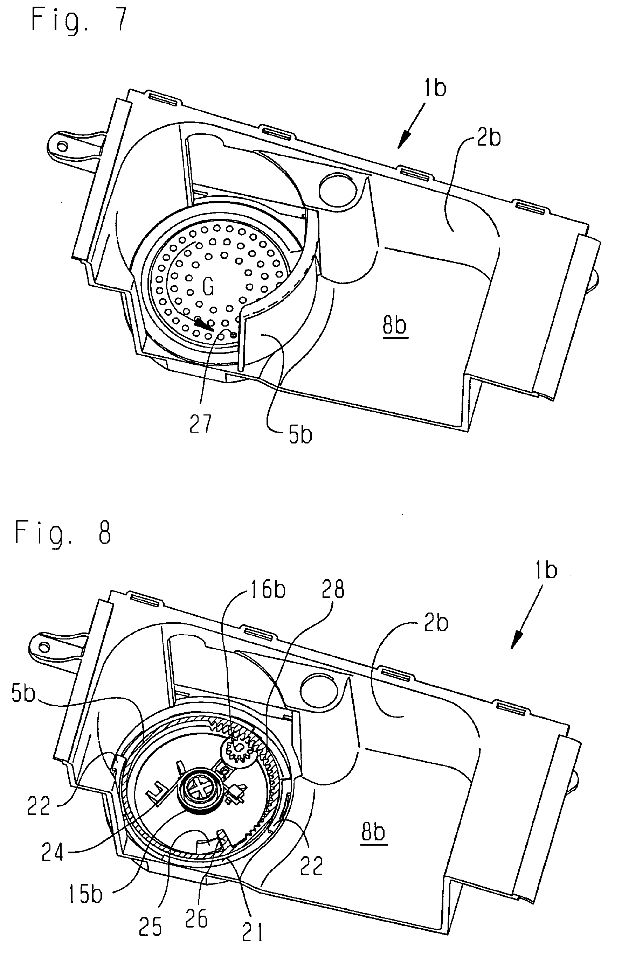

Die Figuren 7 und 8 zeigen den Halter 1b in gleicher Perspektive mit dem Fachteiler 5b in Gebrauchsstellung. Ausgehend von der zuvor dargestellten Position wird diese Stellung durch Drehung des Fachteilers 5b entsprechend Pfeil G erreicht. Figur 8 zeigt wiederum den untersten Teil des Fachteilers 5b im Schnitt. Die Führungsrippen 21 sind mit den Bajonettrippen 22 im Eingriff und stellen damit zugleich die Drehführung des Fachteilers 5b als auch die Bajonettverbindung her. Die Drehfederung ist zwischen dem Federanschlag 23 des Bodens 8b und dem Federanschlag 24 des Fachteilers 5b verspannt und bewirkt somit ein Moment im Uhrzeigersinn auf den Fachteiler 5b. Damit der Fachteiler 5b in dieser Richtung nicht weiter als die dargestellte Gebrauchsstellung dreht, ist am Boden 8b eine Anschlagslasche 25 und am Fachteiler 5b eine Anschlagsrippe 26 angeordnet. Bei der Montage des Fachteilers 5b wird die Anschlagslasche 25 von der Anschlagrippe 26 überfahren und dabei elastisch nach unten verdrängt. Soll der Fachteiler 5b beispielsweise zu Reinigungszwecken demontiert werden, so kann die Anschlagslasche 25 beispielsweise mit einem Stift durch die Bohrung 27 (siehe Figur 7) nach unten gebogen werden und damit die Anschlagfunktion aufgehoben werden. Durch Drehung entgegen Pfeil G kann die Bajonettverbindung dann gelöst werden. Die Figur 8 zeigt weiterhin einen Rotationsdämpfer 16b, der im Boden 8b eingelassen ist und mit einer Zahnung 28 des Fachteilers 5b im Eingriff ist. Entsprechend der erläuterten anderen beiden Ausführungsbeispiele lässt sich der Fachteiler 5b in Richtung von Pfeil G von der Gebrauchsstellung in die Nichtgebrauchsstellung schwenken. Dabei dient wiederum eine Push-Pusch-Mechanik (nicht dargestellt) als Anschlag und Verriegelung.

## Patentansprüche

1. Halter, für einen Getränkebehälter, mit einem Ablagefach (2, 2a), wobei der Halter (1, 1a) einen Fachteiler (5, 5a) aufweist, der mit einer im wesentlichen vertikal angeordneten Drehlagerung als Führung aus einer Nichtgebrauchsstellung, in der der Fachteiler (5, 5a) das Ablagefach (2, 2a) nicht unterteilt, in eine Gebrauchsstellung, in der der Fachteiler (5, 5a) einen Einstellbereich (4, 4a) für den Getränkebehälter vom übrigen Ablagefach (2) abteilt, und umgekehrt beweglich am Ablagefach (2, 2a) geführt ist, und wobei der Halter (1, 1a) eine Durchmesserausgleichsklappe (10, 10a) aufweist, die beim Bewegen des Fachteilers (5, 5a) in die Nichtgebrauchsstellung aus dem Ablagefach (2, 2a) hinaus bewegt wird, **dadurch gekennzeichnet, dass** der Fachteiler (5, 5a) eine Drehfederung (15, 20) aufweist sowie über eine Verriegelungseinrichtung (13, 14, 17) verriegelbar ist.

2. Halter nach Anspruch 1, **dadurch gekennzeichnet, dass** der Fachteiler (5) ein Betätigungselement (9) aufweist.

3. Halter nach Anspruch 2, **dadurch gekennzeichnet, dass** die Verriegelungseinrichtung (13, 14) und das Betätigungselement (9) zumindest teilweise an der Durchmesserausgleichsklappe (10) angeordnet sind.

4. Halter nach Anspruch 3, **dadurch gekennzeichnet, dass** an der Durchmesserausgleichsklappe (10) eine Feder (11) angeordnet ist, die sowohl Teil der Verriegelungseinrichtung (13, 14) als auch Federelement für die Ausgleichsbewegung der Durchmesserausgleichsklappe (10) ist.

5. Halter nach Anspruch 1, **dadurch gekennzeichnet, dass** die Verriegelungseinrichtung eine Push-Push-Mechanik (17) ist.

6. Halter nach Anspruch 1, **dadurch gekennzeichnet, dass** der Fachteiler (5) ein Drehdämpfungselement (16) aufweist.

7. Halter nach Anspruch 1, **dadurch gekennzeichnet, dass** die Drehlagerung als Bajonettverbindung (21, 22) ausgebildet ist.
